# EUROPEAN PATENT APPLICATION

(11) **EP 4 832 583 A1**
(43) Date of publication of application: **28.10.2026**
(21) Application number: 25752219.3
(22) Date of filing: 06.02.2025
(51) Int. Cl.: H04W 36/30, H04W 36/36, H04W 56/00, H04W 74/0838

(54) **COMMUNICATION METHOD, USER EQUIPMENT, CHIP SET, PROGRAM, AND MOBILE COMMUNICATION SYSTEM**

(30) Priority: 08.02.2024 JP 2024017581
(71) Applicant: Kyocera Corporation, Kyoto-shi, Kyoto 612-8501 (JP)
(72) Inventor: FUJISHIRO, Masato, Kyoto-shi, Kyoto 612-8501 (JP); KOIZUMI, Yoshiko, Kyoto-shi, Kyoto 612-8501 (JP)
(74) Representative: Viering, Jentschura & Partner mbB Patent- und Rechtsanwälte
(86) International application number: PCT/JP2025/003951
(87) International publication number: WO 2025/169994

(57) **Abstract**

A communication method executed by a user equipment includes: receiving, from a first cell, information indicating a radio quality condition to be satisfied to perform LTM cell switching for switching a serving cell from the first cell to a second cell by using LTM, and instruction information for instructing preamble transmission of CFRA to the second cell; evaluating whether the radio quality condition has been satisfied for the second cell; receiving, from the first cell or the second cell, a timing advance value derived based on the preamble transmission after performing the preamble transmission to the second cell in accordance with the instruction information; storing the timing advance value until evaluating that the radio quality condition has been satisfied; and applying the timing advance value to perform the LTM cell switching in response to evaluating that the radio quality condition has been satisfied.

## Description

### TECHNICAL FIELD

The present disclosure relates to a communication method, a user equipment, a chipset, a program, and a mobile communication system.

### BACKGROUND OF INVENTION

In the Third Generation Partnership Project (3GPP) (registered trademark; The same applies to the following), technical specifications of New Radio (NR), which is fifth-generation (5G) radio access technology, are defined. In 3GPP mobile communication systems, serving cell switching (serving cell change) of a user equipment in a radio resource control (RRC) connected state is indicated by transmitting a message (so-called handover command) of an RRC layer corresponding to a layer 3 (L3) from a network node to the user equipment.

On the other hand, in Release 18 of the 3GPP standard (3GPP Release 18), technical specifications of L1/L2 Triggered Mobility (LTM) that is a new procedure for the serving cell switching are being formulated. The LTM is a procedure in which a network node receives a layer 1 (L1) measurement report from a user equipment, and based on this, the network node changes a serving cell for the user equipment by means of a cell switch command that the network node signals to the user equipment by a Media Access Control (MAC) Control Element (CE).

### CITATION LIST

### NON-PATENT LITERATURE

Non-Patent Literature 1: 3GPP technical specification "3GPP TS 38.300 V18.0.0 (2023-12)"

### SUMMARY

The present disclosure relates to a communication method that makes it possible to appropriately perform conditional LTM.

A communication method according to a first aspect of the present disclosure is a communication method used in a mobile communication system supporting L1/L2 Triggered Mobility (LTM), the communication method including: receiving, at a user equipment from a first cell, information indicating a radio quality condition to be satisfied to perform LTM cell switching for switching a serving cell of the user equipment from the first cell to a second cell by using the LTM, and instruction information for instructing preamble transmission of contention-free random access (CFRA) to the second cell; evaluating, at the user equipment, whether the radio quality condition has been satisfied for the second cell; receiving, at the user equipment from the first cell or the second cell, a timing advance value derived based on the preamble transmission after performing the preamble transmission to the second cell in accordance with the instruction information; storing, at the user equipment, the timing advance value until evaluating that the radio quality condition has been satisfied; and applying, at the user equipment, the timing advance value to perform the LTM cell switching in response to evaluating that the radio quality condition has been satisfied.

A user equipment according to a second aspect of the present disclosure is a user equipment used in a mobile communication system supporting L1/L2 Triggered Mobility (LTM), the user equipment including: a receiver configured to receive, from a first cell, information indicating a radio quality condition to be satisfied to perform LTM cell switching for switching a serving cell of the user equipment from the first cell to a second cell by using the LTM, and instruction information for instructing preamble transmission of contention-free random access (CFRA) to the second cell; a controller configured to evaluate whether the radio quality condition has been satisfied for the second cell; and a transmitter configured to perform the preamble transmission to the second cell in accordance with the instruction information. The receiver receives a timing advance value derived based on the preamble transmission from the first cell or the second cell. The controller stores the timing advance value until evaluating that the radio quality condition has been satisfied, and applies the timing advance value to perform the LTM cell switching in response to evaluating that the radio quality condition has been satisfied.

A chipset according to a third aspect of the present disclosure includes a circuit that executes the communication method according to the first aspect.

A program according to a fourth aspect of the present disclosure causes a user equipment to execute the communication method according to the first aspect.

A mobile communication system according to a fifth aspect of the present disclosure includes the user equipment according to the second aspect and a network node.

### BRIEF DESCRIPTION OF THE DRAWINGS

FIG. 1 is a diagram illustrating a configuration example of a mobile communication system according to an embodiment.
FIG. 2 is a diagram illustrating a configuration example of a user equipment (UE) according to the embodiment.
FIG. 3 is a diagram illustrating a configuration example of a gNB (network node) according to the embodiment.
FIG. 4 is a diagram illustrating a configuration of a protocol stack of a radio interface of a user plane handling data.
FIG. 5 is a diagram illustrating a configuration of a protocol stack of a radio interface of a control plane handling signaling (control signal).
FIG. 6 is a diagram illustrating an example of an LTM procedure.
FIG. 7 is a diagram illustrating an operation of the UE according to the embodiment.
FIG. 8 is a diagram illustrating a first operation pattern of a mobile communication system according to the embodiment.
FIG. 9 is a diagram illustrating a configuration example of an RRC Reconfiguration message according to the first operation pattern of the embodiment.
FIG. 10 is a diagram illustrating a second operation pattern of the mobile communication system according to the embodiment.
FIG. 11 is a diagram illustrating a third operation pattern of the mobile communication system according to the embodiment.
FIG. 12 is a diagram illustrating a fourth operation pattern of the mobile communication system according to the embodiment.
FIG. 13 is a diagram illustrating a configuration example of an RRC Reconfiguration message according to the fourth operation pattern according to the embodiment.

### DESCRIPTION OF EMBODIMENTS

According to an embodiment, a mobile communication system is described with reference to the drawings. In the description of the drawings, the same or similar parts are denoted by the same or similar reference signs.

### (1) Configuration of Mobile Communication System

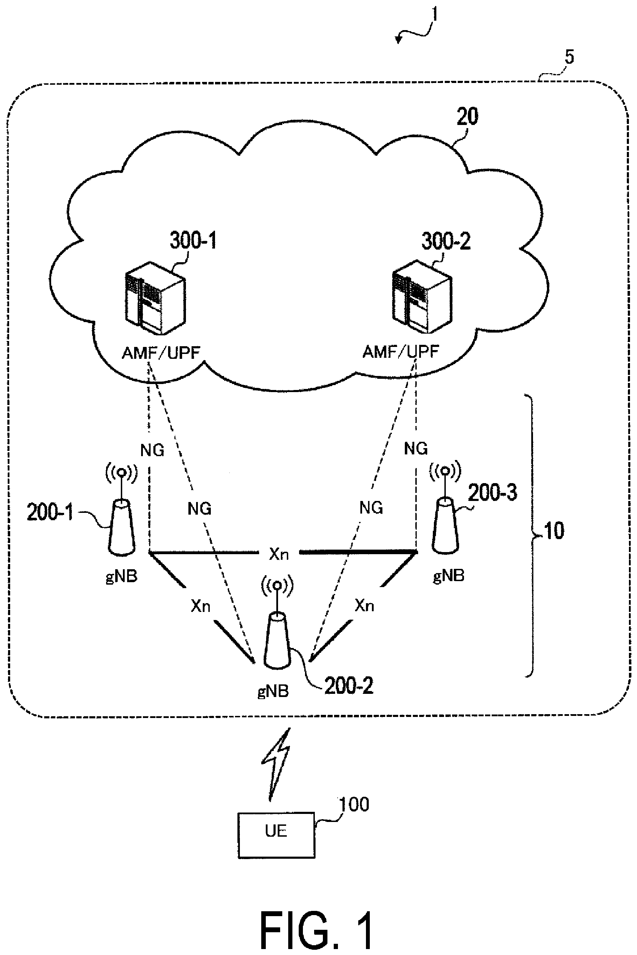

FIG. 1 is a diagram illustrating a configuration example of a mobile communication system 1 according to the present embodiment. The mobile communication system 1 complies with the 5th Generation System (5GS) of the 3GPP standard. The description below takes the 5GS as an example, but a Long Term Evolution (LTE) system may be at least partially applied to the mobile communication system. Alternatively, a sixth generation (6G) system may be at least partially applied to the mobile communication system.

The mobile communication system 1 includes a User Equipment (UE) 100, a 5G radio access network (Next Generation Radio Access Network (NG-RAN)) 10, and a 5G Core Network (5GC) 20. Hereinafter, the NG-RAN 10 may be simply referred to as a RAN 10. The 5GC 20 may be simply referred to as a core network (CN) 20. The RAN 10 and the CN 20 configure a network 5 of the mobile communication system 1.

The UE 100 is a mobile wireless communication apparatus. The UE 100 may be any apparatus as long as the UE 100 is used by a user. Examples of the UE 100 include a mobile phone terminal (including a smartphone) and/or a tablet terminal, a notebook PC, a communication module (including a communication card or a chipset), a sensor or an apparatus provided on a sensor, a vehicle or an apparatus provided on a vehicle (Vehicle UE), and a flying object or an apparatus provided on a flying object (Aerial UE).

The NG-RAN 10 includes base stations 200 (referred to as "gNBs" in 5G systems), which are a type of network node. The gNBs 200 are interconnected via an Xn interface which is an inter-base station interface. Each gNB 200 manages one or more cells. The gNB 200 performs wireless communication with the UE 100 that has established a connection to the cell of the gNB 200. The gNB 200 has a radio resource management (RRM) function, a function of routing user data (hereinafter simply referred to as "data"), a measurement control function for mobility control and scheduling, and the like. The "cell" is used as a term representing a minimum unit of a wireless communication area. The "cell" is also used as a term representing a function or a resource for performing wireless communication with the UE 100. One cell belongs to one carrier frequency (hereinafter, simply referred to as a "frequency").

The gNB can be connected to an Evolved Packet Core (EPC) corresponding to a core network of LTE. An LTE base station can also be connected to the 5GC. The LTE base station and the gNB can be connected via an inter-base station interface.

The 5GC 20 includes an Access and Mobility Management Function (AMF) and a User Plane Function (UPF) 300. The AMF performs various types of mobility controls and the like for the UE 100. The AMF manages mobility of the UE 100 by communicating with the UE 100 by using Non-Access Stratum (NAS) signaling. The UPF controls data transfer. The AMF and UPF are connected to the gNB 200 via an NG interface which is an interface between a base station and the core network.

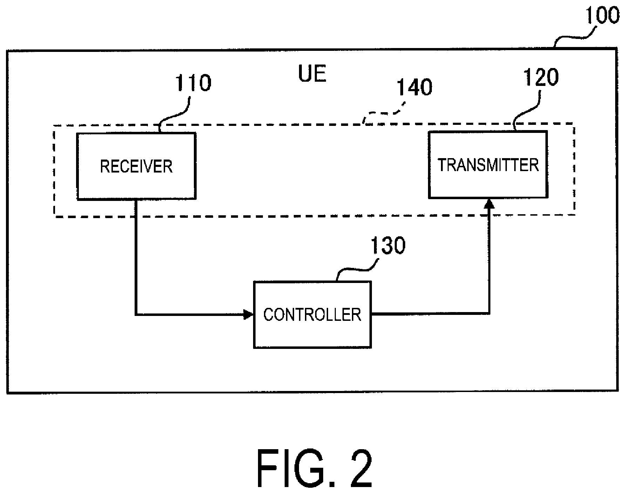

FIG. 2 is a diagram illustrating a configuration example of the UE 100 (user equipment) according to the present embodiment. The UE 100 includes a receiver 110, a transmitter 120, and a controller 130. The receiver 110 and the transmitter 120 constitute a wireless communicator 140 that performs wireless communication with the gNB 200.

The receiver 110 performs various receptions under the control of the controller 130. The receiver 110 includes an antenna and a reception device. The reception device converts a radio signal or a terahertz wave signal received through the antenna into a baseband signal (reception signal) and outputs the resulting signal to the controller 130.

The transmitter 120 performs various transmissions under the control of the controller 130. The transmitter 120 includes an antenna and a transmission device. The transmission device converts a baseband signal (transmission signal) output by the controller 130 into a radio signal or a terahertz wave signal and transmits the resulting signal through the antenna.

The controller 130 performs various controls and processes in the UE 100. Such processing includes processing of respective layers to be described below. The operations of the UE 100 described above and below may be operations under the control of a controller 230. The controller 130 includes at least one processor and at least one memory. The memory stores a program to be executed by the processor and information to be used for processing in the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing.

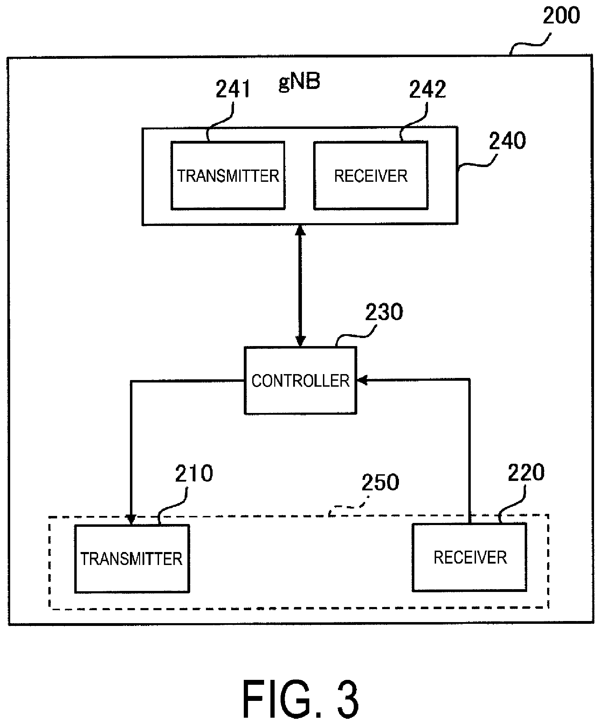

FIG. 3 is a diagram illustrating a configuration example of the gNB 200 (network node) according to the present embodiment. The gNB 200 includes a transmitter 210, a receiver 220, a controller 230, and a network communicator 240. The transmitter 210 and the receiver 220 constitute a wireless communicator 250 that performs wireless communication with the UE 100. The network communicator 240 includes a transmitter 241 that performs transmission and a receiver 242 that performs reception.

The transmitter 210 performs various transmissions under the control of the controller 230. The transmitter 210 includes an antenna and a transmission device. The transmission device converts a baseband signal (transmission signal) output by the controller 230 into a radio signal or a terahertz wave signal and transmits the resulting signal through the antenna.

The receiver 220 performs various types of reception under control of the controller 230. The receiver 220 includes an antenna and a reception device. The reception device converts a radio signal or a terahertz wave signal received through the antenna into a baseband signal (reception signal) and outputs the resulting signal to the controller 230.

The controller 230 performs various types of control and processing in the gNB 200. Such processing includes processing of respective layers to be described below. The operations of the gNB 200 described above and below may be also performed under the control of the controller 230. The controller 230 includes at least one processor and at least one memory. The memory stores a program to be executed by the processor and information to be used for processing in the processor. The processor may include a baseband processor and a CPU. The baseband processor performs modulation and demodulation, coding and decoding, and the like of a baseband signal. The CPU executes the program stored in the memory to thereby perform various types of processing.

The network communicator 240 is connected to a neighboring base station via an Xn interface which is an inter-base station interface. The network communicator 240 is connected to the AMF/UPF 300 via an NG interface which is an interface between a base station and the core network. The gNB 200 may include a Central Unit (CU) and a Distributed Unit (DU) (i.e., functions are divided), and both units may be connected via an F1 interface that is a fronthaul interface.

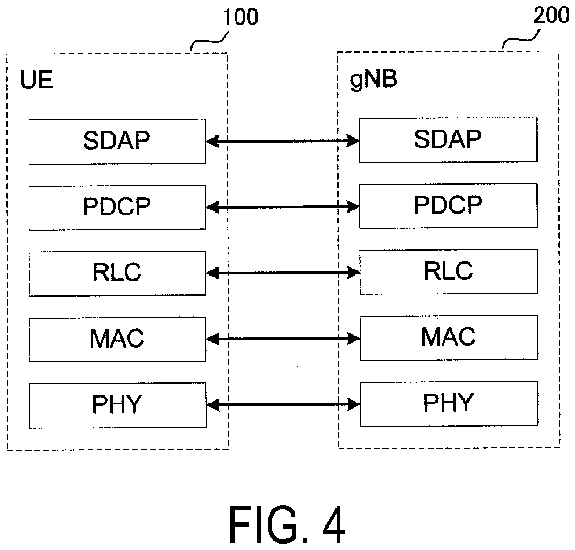

FIG. 4 is a diagram illustrating a configuration of a protocol stack of a radio interface of a user plane handling data.

A radio interface protocol of the user plane includes a physical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs encoding/decoding, modulation/demodulation, antenna mapping/demapping, and resource mapping/demapping. Data and control information are transmitted between the PHY layer of the UE 100 and the PHY layer of the gNB 200 via a physical channel. The PHY layer of the UE 100 receives downlink control information (DCI) transmitted from the gNB 200 over a physical downlink control channel (PDCCH). Specifically, the UE 100 performs blind decoding of the PDCCH by using a radio network temporary identifier (RNTI) and acquires a successfully decoded DCI as a DCI addressed to the UE. The DCI transmitted from the gNB 200 is appended with Cyclic Redundancy Code (CRC) parity bits scrambled by the RNTI.

The MAC layer performs priority control of data, retransmission processing through hybrid ARQ (HARQ: Hybrid Automatic Repeat reQuest), a random access procedure, and the like. Data and control information are transmitted between the MAC layer of the UE 100 and the MAC layer of the gNB 200 via a transport channel. The MAC layer of the gNB 200 includes a scheduler. The scheduler decides transport formats (transport block sizes, Modulation and Coding Schemes (MCSs)) in the uplink and the downlink and resource blocks to be allocated to the UE 100.

The RLC layer transmits data to the RLC layer on the reception side by using functions of the MAC layer and the PHY layer. Data and control information are transmitted between the RLC layer of the UE 100 and the RLC layer of the gNB 200 via a logical channel.

The PDCP layer performs header compression/decompression, encryption/decryption, and the like.

The SDAP layer performs mapping between an IP flow as the unit of Quality of Service (QoS) control performed by a core network and a radio bearer as the unit of QoS control performed by an Access Stratum (AS). When the RAN is connected to the EPC, the SDAP need not be provided.

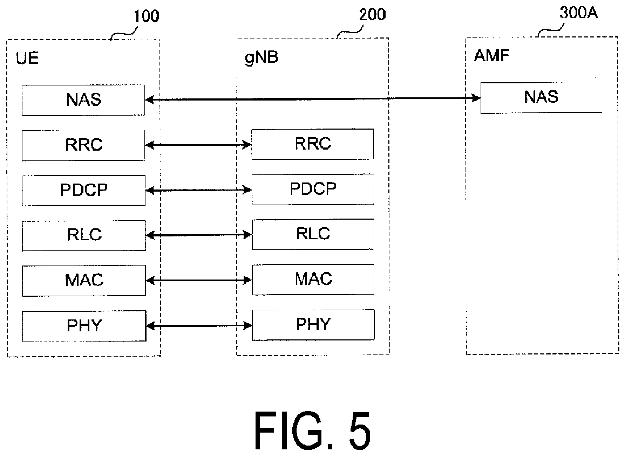

FIG. 5 is a diagram illustrating a configuration of a protocol stack of a radio interface of a control plane handling signaling (control signal).

The protocol stack of the radio interface of the control plane includes a Radio Resource Control (RRC) layer and a Non-Access Stratum (NAS) layer instead of the SDAP layer illustrated in FIG. 4.

RRC signaling for various configurations is transmitted between the RRC layer of the UE 100 and the RRC layer of the gNB 200. The RRC layer controls a logical channel, a transport channel, and a physical channel according to establishment, re-establishment, and release of a radio bearer. When connection (RRC connection) is established between RRC of the UE 100 and RRC of the gNB 200, the UE 100 is in an RRC connected state. When connection (RRC connection) is not established between the RRC of the UE 100 and the RRC of the gNB 200, the UE 100 is in an RRC idle state. When the connection between the RRC of the UE 100 and the RRC of the gNB 200 is suspended, the UE 100 is in an RRC inactive state.

The NAS layer (also simply referred to as "NAS"), which is located above the RRC layer, performs session management, mobility management, and the like. NAS signaling is transmitted between the NAS layer of the UE 100 and the NAS layer of an AMF 300A. The UE 100 includes an application layer other than the protocol of the radio interface. The layer below the NAS layer is referred to as an AS layer (also simply referred to as "AS").

### (2) Overview of LTM

The mobile communication system 1 according to the present embodiment supports L1/L2-Triggered Mobility (LTM).

In a typical handover procedure, serving cell switching is triggered by signaling of an upper layer, L3, specifically an RRC layer. This type of typical handover is also referred to as an L3 handover. In the L3 handover, an L3 Measurement Report message, which is an RRC message, is transmitted from the UE 100 to the gNB 200. Based on the Measurement Report message, the gNB 200 determines the handover of the UE 100 and instructs a cell switching by transmitting a handover command (specifically, an RRC Reconfiguration message), which is an RRC message, from the gNB 200 to the UE 100.

On the other hand, LTM is technology for reducing a delay in mobility (specifically, a delay in serving cell switching) compared to a general handover procedure by triggering serving cell switching through signaling of a Layer 1 (L1) and/or a Layer 2 (L2) that are lower layers. In LTM, the gNB 200 receives an L1 measurement report from the UE 100, and based on this, the gNB 200 instructs the UE 100 to perform serving cell switching using a cell switching command for signaling through a MAC CE.

Specifically, in the LTM, first, the gNB 200 prepares an LTM candidate cell configuration for a candidate for a switching destination cell, and provides the LTM candidate cell configuration to the UE 100 through RRC signaling.

Second, the UE 100 performs processing of synchronization with the candidate cell through an early synchronization (Early sync).

Third, the gNB 200 receives an L1 measurement report from the UE 100, determines serving cell switching to a target cell based on the L1 measurement report, and transmits a Cell Switch Command indicating the target cell (LTM candidate cell configuration) to the UE 100 through the MAC CE. A serving cell switching trigger is transmitted through the MAC CE including at least a candidate configuration index together with a beam indicator.

Fourth, the UE 100 switches the serving cell in response to the cell switch command from the gNB 200 (source cell).

As described above, when the gNB 200 selects the LTM candidate cell configuration as a target configuration, the serving cell switching is triggered. The LTM candidate cell configuration can be added, changed and released by the gNB 200 through RRC signaling.

The following principles apply to the LTM.
- Each LTM candidate cell configuration can be provided as a difference configuration (delta configuration) relative to a reference configuration used to form the complete candidate cell configuration.
   - When the complete candidate cell configuration is applied, a current UE configuration is replaced at a time of serving cell switch. A reconfiguration procedure involves a replacement, but not necessarily a reset of the MAC, RLC or PDCP layer.
- The user plane, if configured through RRC signaling in order to avoid additional delay of data recovery, is continued without reset.
- In the LTM, security is not updated.
- The LTM between subsequent LTM candidate cell configurations can be performed without RRC reconfiguration. That is, the UE 100 does not release other LTM candidate cell configurations after the LTM is triggered.

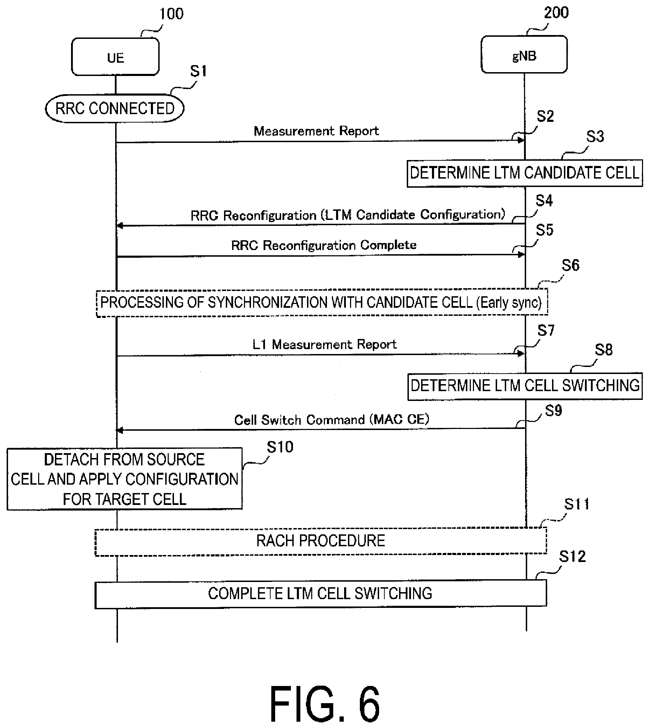

FIG. 6 is a diagram illustrating an example of a cell switching procedure using LTM. In the illustrated example, it is assumed that the UE 100 performs serving cell switching from a first cell in the gNB 200 to a second cell.

Here, the first cell and the second cell may be formed with respectively different Transmission and Reception Points (TRPs). In the following description of the embodiment, the second cell will be also referred to as a "candidate cell (or LTM candidate cell)" until the serving cell switching through the LTM is determined, and the second cell will be also referred to as a "target cell" after the serving cell switching through the LTM is determined. The first cell will be also referred to as a "source cell".

In step S1, the UE 100 is in the RRC connected state in the cell (the first cell or a source cell) of the gNB 200.

In step S2, the UE 100 transmits a Measurement Report message, which is an RRC message, to the gNB 200.

In step S3, the gNB 200 determines to use the LTM based on the Measurement Report message and starts preparing the candidate cell.

In step S4, the gNB 200 transmits an RRC Reconfiguration message including the LTM candidate cell configuration (LTM candidate configuration) for one or more candidate cells to the UE 100. The candidate cell configuration may include a random access channel (RACH) configuration used for transmitting RA preambles to the corresponding candidate cells, such as contention-free random access (CFRA) configuration. Such a RACH configuration may be referred to as an Early UL Sync Configuration (EarlyUISyncConfig). A CFRA is a random access procedure in which a dedicated RACH resource (for example, a dedicated preamble sequence and/or a dedicated time and frequency resource) is allocated to each UE 100, and no RACH conflict occurs between UE 100s.

In step S5, the UE 100 saves the LTM candidate cell configuration and transmits an RRC Reconfiguration Complete message to the gNB 200.

In the step S6, the UE 100 may perform the processing of synchronization with the candidate cell before receiving a cell switch command. Such synchronization processing may also be referred to as Early Sync. Here, the UE 100 may perform downlink synchronization processing (DL synchronization processing) on the candidate cell and then perform Early Timing Advance (TA) acquisition on the candidate cell requested by the gNB 200 (source cell). This is performed by CFRA triggered by a PDCCH order from the source cell. When DCI Format 1_0 is used and all the "Frequency domain resource assignment" fields in the DCI are set to "1", the DCI is treated as a PDCCH order. When an Early UL Sync Configuration (EarlyUISyncConfig) is configured in the UE 100, the PDCCH order may include a cell indicator that indicates a corresponding RACH transmission cell, that is, to which candidate cell the UE 100 may transmit a random access preamble (RA preamble).

The UE 100 transmits an RA preamble to a designated candidate cell. In order to minimize the communication interruption of the source cell due to the CFRA to the candidate cell, in the early sync, the UE 100 does not receive a random access response (RAR) for the purpose of acquiring a TA value from the candidate cell. The TA value of the candidate cell (target cell) is indicated in the cell switch command in the step S9. The TA value is a value for adjusting the uplink transmission timing of the UE 100.

In step S7, the UE 100 performs layer 1 (L1) measurement on the configured candidate cell and transmits a physical layer measurement report (L1 Measurement Report) to the gNB 200. The L1 Measurement Report is transmitted and received on the L1, which is the PHY layer. For example, the UE 100 transmits the L1-RSRP and/or the L1-SINR to the gNB 200 on a physical uplink control channel (PUCCH) and/or a physical uplink shared channel (PUSCH).

In step S8, the gNB 200 determines to perform serving cell switching to the target cell (second cell).

In step S9, the gNB 200 transmits a Cell Switch Command (MAC CE) including a candidate configuration index of the target cell to the UE 100. The Cell Switch Command may include a TA value requested in the early sync.

In step S10, the UE 100 switches to the configuration for the target cell. To be specific, the UE 100 detaches from the source cell (first cell) and applies the configuration for the target cell.

In step S11, if the serving cell switching needs to include execution of a random access procedure (if, for example, the Cell Switch Command does not include a valid TA value), the UE 100 executes the random access procedure with respect to the target cell. When it is not necessary to acquire the TA of the target cell at the time of serving cell switching (if, for example, the Cell Switch Command includes a valid TA value), the UE 100 can skip the random access procedure.

In step S12, the UE 100 indicates that the serving cell switching to the target cell has been normally completed. Thereafter, the UE 100 may execute steps S6 to S12 a plurality of times for subsequent LTM serving cell switching based on the configuration provided in step S4.

### (3) Operation Overview

In 3GPP Release 19, the introduction of a Conditional LTM (C-LTM) procedure is planned to be considered. The cell switching procedure using LTM illustrated in FIG. 6 can be applied to a C-LTM procedure, similar to a Conditional L3 Handover (CHO).

In the present embodiment, the gNB 200 configures in advance an execution condition (also referred to as a "cell switching trigger condition" or "CondEvent"), which is a radio quality condition for performing cell switching, in the UE 100 in the RRC Reconfiguration message in step S4. The UE 100 performs cell switching using LTM (also referred to as "LTM cell switching") when the radio quality condition has been satisfied. Thereby, it is possible to skip the operations from the L1 Measurement Report in step S7 to the cell switching command (MAC CE) in step S9. As a result, it is possible to increase the speed of cell switching from the first cell to the second cell and minimize momentary interruptions in data communication.

Here, in LTM of the related art, the gNB 200 notifies the UE 100 of a TA value to be applied to the second cell (candidate cell, target cell) in the cell switching command in step S9. On the other hand, in C-LTM, the cell switching command in step S9 is skipped, resulting in a problem that the UE 100 cannot acquire the TA value to be applied to the second cell from the gNB 200. As a result, the UE 100 may need to perform a random access procedure on the second cell when the configured radio quality condition is satisfied. For this reason, it is difficult to increase the speed of the cell switching from the first cell to the second cell.

Consequently, in the present embodiment, the UE 100 having C-LTM configured therein transmits a preamble to the candidate cell (specifically, transmission of an RA preamble) before the configured radio quality condition is satisfied, and acquires a TA value by receiving a random access response (RAR) that includes the TA value of the candidate cell. Thereby, the UE 100 already has the TA value of the second cell when a radio quality condition is satisfied for the second cell, eliminating the need for a random access procedure for the second cell and enabling faster cell switching from the first cell to the second cell.

In the following description of the embodiment, an example is described in which the UE 100 acquires the TA value of the second cell using an RAR. However, the UE 100 may acquire the TA value by other signaling methods instead of the RAR. For example, a MAC protocol data unit (PDU) or a MAC CE different from the RAR may be used, or an RRC message may be used. When using the MAC CE, the UE 100 may acquire the TA value using a new MAC CE dedicated to early synchronization (for example, Early Sync TA notification MAC CE).

Normally, when the UE 100 acquires a TA value using an RAR, it immediately applies the TA value. However, in the case of C-LTM, when the radio quality condition for the second cell is not satisfied when the TA value is acquired using the RAR, the UE 100 may not immediately apply the TA value. In such a case, when the UE 100 immediately applies the TA value, there is a concern that communication with the first cell, which is the current serving cell, may not be able to be performed appropriately.

Consequently, in the present embodiment, even when the UE 100 acquires a TA value using an RAR, the UE 100 stores the TA value without applying it until the configured radio quality condition is satisfied (that is, the UE 100 continues to apply the TA value of the first cell, which is the current serving cell, until then). Then, when the radio quality condition is satisfied, the UE 100 applies the TA value to perform LTM cell switching.

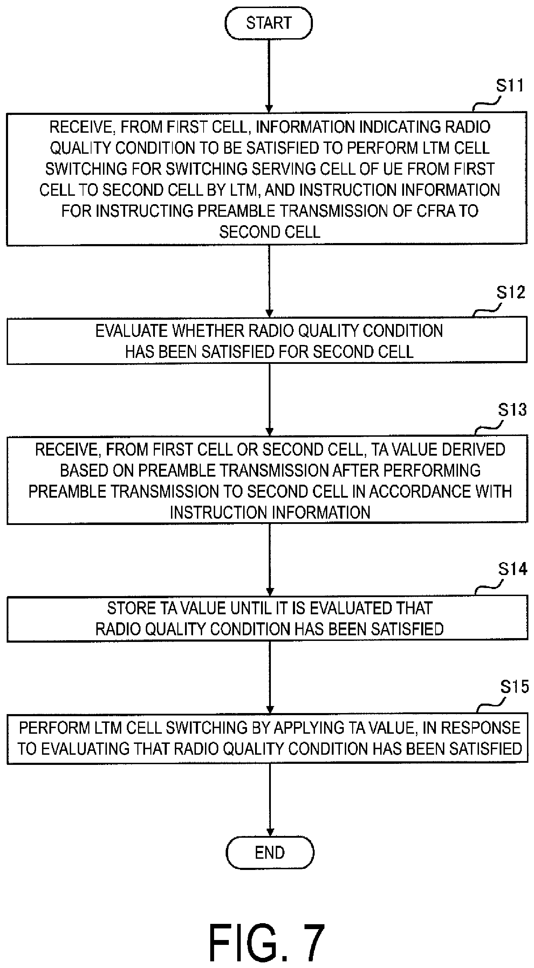

FIG. 7 is a diagram illustrating an operation of the UE 100 according to the present embodiment. For a content that overlaps with the LTM cell switching procedure of the related art illustrated in FIG. 6, a repeated description will be omitted.

In step S11, the UE 100 receives, from the first cell, information indicating a radio quality condition to be satisfied in order to perform LTM cell switching for switching a serving cell of the UE 100 from the first cell to the second cell by using LTM, and instruction information for instructing preamble transmission of CFRA to the second cell. The UE 100 receives the information indicating the radio quality condition from the first cell in an RRC Reconfiguration message (see step S4 in FIG. 6). The RRC Reconfiguration message may also include a random access channel (RACH) configuration used for transmitting an RA preamble to the second cell, for example, a CFRA configuration.

The RRC Reconfiguration message may include a candidate cell configuration list, which is a list including configuration information (candidate cell configuration) of each of a plurality of second cells. A candidate cell configuration, which is each entry in the candidate cell configuration list, includes a cell ID of a corresponding second cell and information indicating a radio quality condition to be applied to the corresponding second cell. The candidate cell configuration may also include a RACH configuration (CFRA configuration) of the corresponding second cell.

A radio quality may be at least one measured value among a reference signal received power (RSRP), a reference signal radio quality (RSRQ), a signal-to-interference-plus-noise ratio (SINR), and a received signal strength indicator (RSSI). The reference signal may be an SS/PBCH block (SSB) or a Channel State Information (CSI) reference signal. The information indicating the radio quality condition may be information indicating a radio quality condition to be satisfied for the first cell (current serving cell) and/or the second cell (candidate cell) to trigger LTM cell switching. For example, the information indicating the radio quality condition may be an event (condition) such as "Neighbour becomes offset better than SpCell," that is, a trigger condition indicating that the radio quality of the second cell has improved by an offset amount compared to the radio quality of the first cell. In this case, the information indicating the radio quality condition may include an offset value. Alternatively, the information indicating the radio quality condition may be information indicating an event (condition), such as "Nighbour/SpCell becomes better/worse than threshold". In this case, the information indicating the radio quality condition may include a threshold.

The UE 100 receives instruction information for instructing preamble transmission of CFRA to the second cell in the PDCCH order or the RRC Reconfiguration message.

In the first operation pattern of the present embodiment, the UE 100 receives the PDCCH order including the instruction information from the first cell. As described above, when DCI Format 1_0 is used and all the "Frequency domain resource assignment" fields in the DCI are set to "1", the DCI is treated as a PDCCH order. The PDCCH order may include a cell indicator that indicates the second cell to which an RA preamble is transmitted. The cell indicator may indicate a plurality of second cells as destinations to which an RA preamble is transmitted. However, a new DCI format may be used instead of the PDCCH order of the related art.

In a second operation pattern of the present embodiment, the UE 100 receives the instruction information from the first cell in the RRC Reconfiguration message. Such instruction information may include information indicating a candidate cell to which the RA preamble is to be transmitted. The instruction information may be included in a candidate cell configuration, which is each entry of a candidate cell configuration list in the RRC reconfiguration message. In other words, the instruction information may be independently configurable for each second cell (that is, configurable in a cell unit).

In step S12, the UE 100 evaluates whether the configured radio quality condition has been satisfied. For example, the UE 100 measures the radio quality of the first cell and/or the radio quality of the second cell and evaluates (determines) whether the measured value satisfies the configured radio quality condition. When a plurality of second cells are set as candidate cells, the UE 100 performs the evaluation in step S12 for each second cell.

In step S13, the UE 100 transmits a preamble to the second cell in accordance with the instruction information (specifically, transmits an RA preamble of CFRA), and then receives an RAR including the TA value derived based on the preamble transmission from the first or second cell. When the UE 100 is instructed to transmit preambles to a plurality of second cells, it may transmit a preamble to each second cell and acquire a TA value of each second cell.

In step S14, the UE 100 stores the TA value until evaluating that a radio quality condition for any of the second cells has been satisfied. Specifically, even when the UE 100 acquires the TA value using an RAR, it stores the TA value without applying it until the radio quality condition for any of the second cells is satisfied (that is, it continues to apply the TA value of the first cell until then).

In step S15, the UE 100 performs LTM cell switching by applying the TA value of the second cell for which the radio quality condition has been satisfied, in response to evaluating that the radio quality condition has been satisfied for any of the second cells. Here, the UE 100 performs the LTM cell switching by applying the stored TA value without performing a random access procedure on the second cell. When the UE 100 performs the LTM cell switching, it transmits an RRC Reconfiguration Complete message to the second cell. The UE 100 may regard the execution of the LTM cell switching as having been successfully completed when it determines that the network (the second cell) has successfully received the first uplink data.

According to such an operation, the UE 100 can skip the operations from the L1 Measurement Report in step S7 to the cell switching command (MAC CE) in step S9, and rapidly perform the LTM cell switching when the radio quality condition configured by the gNB 200 is satisfied. When the radio quality condition is satisfied, the UE 100 does not need to perform a random access procedure on the second cell, and thus can increase the speed of the cell switching.

Whether the UE 100 receives the RAR from the first or second cell may be determined by the technical specifications of 3GPP. Alternatively, the gNB 200 may designate (configure), in the UE100, whether the UE 100 receives the RAR from the first or second cell using an RRC Reconfiguration message. In this case, the designation (configuration) may be made independently for each of the plurality of second cells, or the designation (configuration) may be made in common for all of the second cells. Alternatively, the UE 100 may receive the RAR from a candidate cell (second cell) designated by the PDCCH order.

However, since the second cell is a non-serving cell, it is conceivable that the UE 100 of the related art does not have the capability to receive an RAR from the second cell. For this reason, the UE 100 having the capability may transmit capability information, to the network (gNB 200), indicating that it has the capability to receive the RAR from the second cell. Such capability information may be transmitted in a UE Capability message, which is a type of RRC message. For example, when connecting to the gNB 200, the UE 100 may transmit a UE Capability message to the gNB 200 in response to receiving a capability query from the gNB 200.

### (4) Specific Example of Operation

As a specific example of an operation of the mobile communication system 1 according to the embodiment, first to fourth operation patterns will be described. Hereinafter, a scenario in which the first cell and the second cell belong to the same gNB 200 (that is, the same CU) will be referred to as an intra-gNB scenario, and a scenario in which the first cell and the second cell belong to different gNB 200s (that is, different CUs) will be referred to as an inter-gNB scenario.

### (4.1) First Operation Pattern

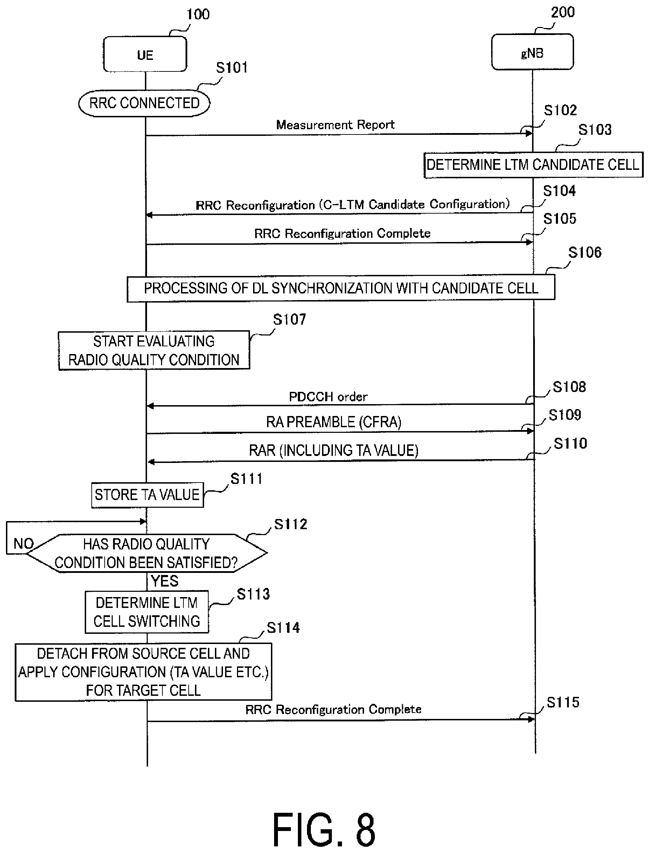

FIG. 8 is a diagram illustrating a first operation pattern of the mobile communication system 1 according to the present embodiment. The first operation pattern is an operation pattern in which the UE 100 receives a PDCCH order while executing evaluation of the second cell in an intra-gNB scenario.

The operations in steps S101 to S105 are the same as the LTM cell switching procedure of the related art in FIG. 6. However, in step S104, the gNB 200 transmits, to the UE 100, an RRC Reconfiguration message including an LTM candidate cell configuration for C-LTM (C-LTM Candidate Configuration). The LTM candidate cell configuration for C-LTM may include a candidate cell configuration list, which is a list including configuration information (candidate cell configuration) of each of a plurality of second cells. A candidate cell configuration, which is each entry in the candidate cell configuration list, includes a cell ID of a corresponding second cell, and information indicating a radio quality condition to be applied to the corresponding second cell. The candidate cell configuration may also include a RACH configuration (CFRA configuration) of the corresponding second cell. The candidate cell configuration may include a timer value for a timer that defines an upper limit of an RAR waiting period. The timer may be a different timer from a RACH/RAR related timer of the related art. The timer value may be an offset value with respect to a timer value of the related art. The UE 100 may start the timer when transmitting an RA preamble to the corresponding second cell, and when the timer expires without receiving an RAR, the UE 100 may transmit the RA preamble again to the corresponding second cell. The UE 100 may determine that a random access procedure is required for the corresponding second cell during cell switching.

In step S106, the UE 100 performs downlink synchronization processing (DL synchronization processing) for the second cell.

In step S107, the UE 100 starts evaluating whether the radio quality condition configured in step S104 has been satisfied. For example, the UE 100 measures the radio quality of the first cell and/or the radio quality of the second cell and evaluates (determines) whether the measured value satisfies the configured radio quality condition. When a plurality of second cells are configured as candidate cells, the UE 100 starts evaluating each second cell.

In step S108, a gNB 200 (first cell) transmits a PDCCH order to the UE 100. The UE 100 receives the PDCCH order (instruction information) from the first cell.

In step S109, the UE 100 transmits an RA preamble of CFRA to a second cell designated by the PDCCH order (instruction information). Here, the UE 100 may transmit the preamble based on the CFRA configuration configured in step S104. A gNB 200 (second cell) receives the RA preamble and derives a TA value based on the received RA preamble. When the UE 100 is instructed to transmit preambles to a plurality of second cells, it may transmit preambles to the second cells. In this case, the gNB 200 may derive a TA value for each second cell.

In step S110, a gNB 200 (first or second cell) transmits an RAR including the derived TA value to the UE 100. The UE 100 receives the RAR from the first or second cell. The RAR may include respective TA values of the plurality of second cells. For example, the RAR may include a plurality of sets each including a cell ID and a TA value of a second cell.

In step S111, the UE 100 stores the TA value acquired in step S110 without applying it. The UE 100 may store a TA value for each of the plurality of second cells.

In step S112, the UE 100 determines whether the radio quality condition has been satisfied for any of the second cells. When it is determined that the radio quality condition has been satisfied for any of the second cells (step S112: YES), in step S113, the UE 100 determines to perform LTM cell switching to the second cell for which the radio quality condition has been satisfied.

In step S114, the UE 100 detaches from the first cell, which is a source cell, and applies the configuration of the second cell, which is a target cell. Here, the UE 100 applies the TA value stored for the second cell, which is determined in step S112.

In step S115, the UE 100 applies the TA value to the second cell (target cell) determined in step S112 and transmits an RRC Reconfiguration Complete message. The gNB 200 receives the RRC Reconfiguration Complete message. The UE 100 may regard the execution of the LTM cell switching from the first cell to the second cell as having been successfully completed when it determines that the second cell has successfully received the first uplink data.

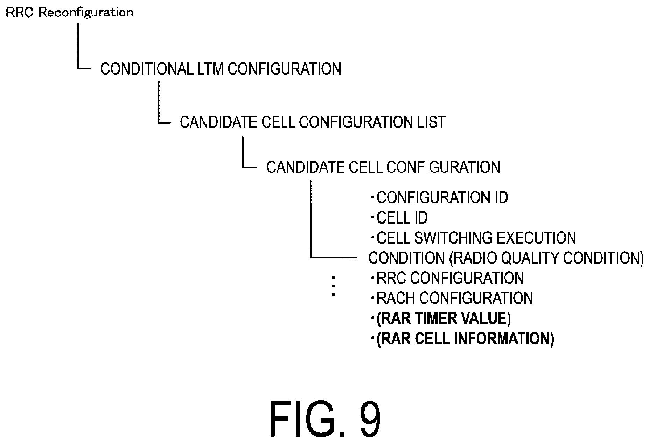

FIG. 9 is a diagram illustrating a configuration example of an RRC Reconfiguration message (RRC message in step S104) related to the first operation pattern of the present embodiment.

In the illustrated example, the RRC Reconfiguration message includes, as an information element, a conditional LTM configuration (C-LTM config) for configuring conditional LTM cell switching in the UE 100. The conditional LTM configuration includes, as an information element, a candidate cell configuration list (C-LTM Config List) for adding a conditional LTM cell switching configuration for each candidate cell (second cell).

The candidate cell configuration list includes, as an entry, a candidate cell configuration which is a conditional LTM cell switching configuration for each candidate cell (second cell). The candidate cell configuration includes a configuration ID for identifying the configuration, a cell ID for identifying a corresponding candidate cell (second cell), information indicating an execution condition of cell switching (radio quality condition), an RRC configuration to be applied to communication with the corresponding candidate cell (second cell), and a RACH configuration (CFRA configuration) to be applied to the corresponding candidate cell (second cell). The candidate cell configuration may also include a timer value (RAR timer value) for a timer that defines an upper limit of a waiting period of an RAR for the corresponding candidate cell (second cell). The candidate cell configuration may also include information (RAR cell information) indicating whether the RAR may be received from a first cell or a second cell for the corresponding candidate cell (second cell).

In the illustrated example, a new conditional LTM configuration (C-LTM Config) is provided instead of the LTM Config which is an information element introduced in 3GPP Release 18. However, as another configuration example, 3GPP Release 18 may be reused, and each of a cell switching execution condition and a TA value may be added to each entry in the candidate cell configuration list (LTM Candidate To Add Mod List in 3GPP Release 18) within the LTM Config.

### (4.2) Second Operation Pattern

The second operation pattern will be described mainly focusing on differences from the first operation pattern. The second operation pattern is an operation pattern in which the UE 100 receives a PDCCH order while executing evaluation of the second cell and receives an RAR from the first cell after preamble transmission in an inter-gNB scenario.

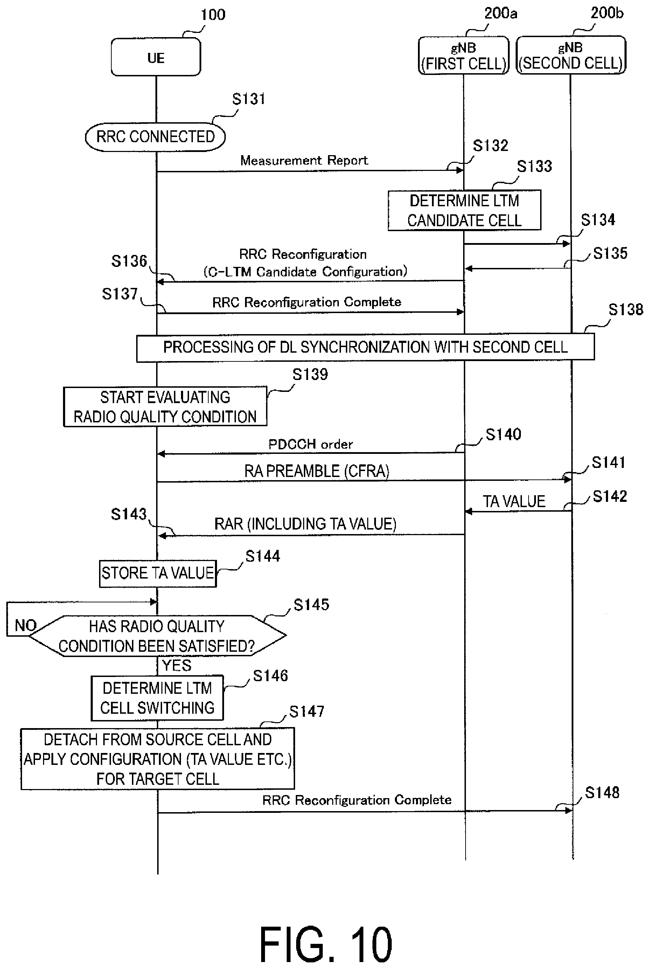

FIG. 10 is a diagram illustrating the second operation pattern of the mobile communication system 1 according to the present embodiment.

In step S131, the UE 100 is in an RRC connected state in the first cell of the gNB 200.

In step S132, the UE 100 transmits a Measurement Report message to a gNB 200a (first cell).

In step S133, the gNB 200a determines an LTM candidate cell (second cell) based on the Measurement Report message.

In step S134, the gNB 200a transmits, to a gNB 200b that manages the second cell, a request message for requesting preparation for LTM cell switching of the UE 100. The request message may be a message transmitted on an Xn interface, for example, an Xn Handover Request message. The request message may include information for requesting preparation (reservation) of CFRA resources. The request message may also include information for requesting an LTM configuration. Upon receiving the request message, the gNB 200b reserves the CFRA resources and determines the LTM configuration.

In step S135, the gNB 200b transmits an acknowledgment message to the gNB 200a for the request message in step S134. The acknowledgment message may be a message transmitted on the Xn interface, for example, an Xn Handover Request Acknowledgement message. The acknowledgment message includes an LTM configuration, which includes CFRA information (CFRA configuration) regarding the reserved CFRA resources.

In step S136, the gNB 200a (first cell) transmits, to the UE 100, an RRC Reconfiguration message that includes an LTM candidate cell configuration (C-LTM Candidate Configuration) including the LTM configuration received from the gNB 200b. The configuration of the LTM candidate cell configuration is the same as that of the first operation pattern. The LTM candidate cell configuration includes a CFRA configuration based on CFRA information from the gNB 200a (first cell).

In step S137, the UE 100 saves the LTM candidate cell configuration received from the gNB 200a (first cell) and transmits an RRC Reconfiguration Complete message to the gNB 200a (first cell).

In step S138, the UE 100 performs downlink synchronization processing (DL synchronization processing) for the second cell.

In step S139, the UE 100 starts evaluating whether the radio quality condition configured in step S136 has been satisfied. For example, the UE 100 measures the radio quality of the first cell and/or the radio quality of the second cell and evaluates (determines) whether the measured value satisfies the configured radio quality condition. When a plurality of second cells are configured as candidate cells, the UE 100 starts evaluating each second cell.

In step S140, the gNB 200a (first cell) transmits a PDCCH order designating a second cell to the UE 100. The UE 100 receives the PDCCH order (instruction information) from the first cell.

In step S141, the UE 100 transmits an RA preamble of CFRA to the second cell designated by the PDCCH order. Here, the UE 100 may transmit the preamble based on the CFRA configuration configured in step S136. The gNB 200b receives the RA preamble and derives a TA value based on the received RA preamble. The gNB 200b may specify the UE 100 that has transmitted the preamble based on the RACH resources (CFRA resources) used for the preamble transmission. When the UE 100 is instructed to transmit preambles to a plurality of second cells, it may transmit a preamble to each second cell. In this case, the corresponding gNB 200 may derive a TA value for each second cell.

In step S142, the gNB 200b transmits, to the gNB 200a, a message including the TA value derived based on the RA preamble. The gNB 200a receives the message. The message may be a message transmitted on an Xn interface, for example, a new TA INFORMATION TRANSFER message. In the message, the TA value derived based on the RA preamble may be associated with a cell ID of the second cell and identification information for identifying the UE 100 specified based on the RACH resources (CFRA resources). The gNB 200a may identify the UE 100 corresponding to the TA value notified by the gNB 200b based on the identification information.

In step S143, the gNB 200a (first cell) transmits, to the UE 100, an RAR including the TA value notified by the gNB 200b. The UE 100 receives the RAR from the first cell. The RAR may include respective TA values of the plurality of second cells. For example, the RAR may include a plurality of sets each including a cell ID and a TA value of a second cell.

In step S144, the UE 100 stores the TA value acquired in step S143 without applying it. The UE 100 may store a TA value for each of the plurality of second cells.

In step S145, the UE 100 determines whether the radio quality condition has been satisfied for any of the second cells. When it is determined that the radio quality condition has been satisfied for any of the second cells (step S145: YES), in step S146, the UE 100 determines to perform LTM cell switching to the second cell for which the radio quality condition has been satisfied.

In step S147, the UE 100 detaches from the first cell, which is a source cell, and applies the configuration of the second cell, which is a target cell. Here, the UE 100 applies the TA value stored for the second cell, which is determined in step S146.

In step S148, the UE 100 applies the TA value to the second cell (target cell) determined in step S112 and transmits an RRC Reconfiguration Complete message. The gNB 200b (second cell) receives the RRC Reconfiguration Complete message. The UE 100 may regard the execution of the LTM cell switching from the first cell to the second cel as having been successfully completed when it determines that the second cell has successfully received the first uplink data. The gNB 200b may transmit, to the gNB 200a, a notification indicating that the UE 100 has accessed the second cell.

### (4.3) Third Operation Pattern

The third operation pattern will be described mainly focusing on differences from the first and second operation patterns. The third operation pattern is an operation pattern in which the UE 100 receives a PDCCH order while executing evaluation of the second cell and receives an RAR from the second cell after preamble transmission in an inter-gNB scenario.

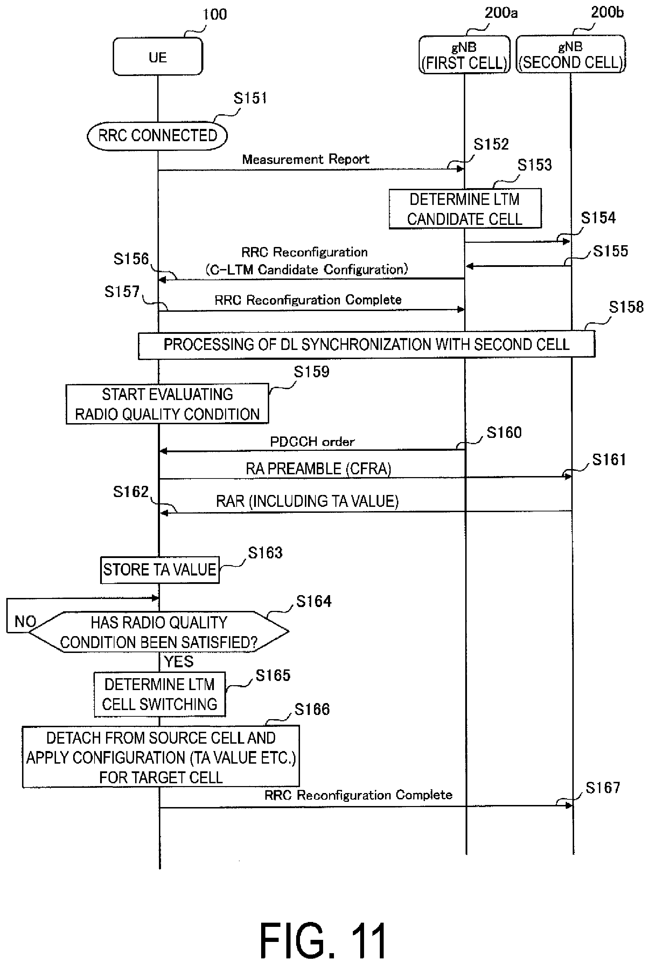

FIG. 11 is a diagram illustrating the third operation pattern of the mobile communication system 1 according to the present embodiment.

The operations in steps S151 to S161 are the same as those of the second operation pattern.

In step S162, the gNB 200b (second cell) transmits, to the UE 100, an RAR including a TA value derived based on an RA preamble. The UE 100 receives the RAR from the second cell.

In step S163, the UE 100 stores the TA value acquired in step S142 without applying it. The UE 100 may store a TA value for each of the plurality of second cells.

The operations in steps S164 to S167 are the same as those of the second operation pattern.

### (4.4) Fourth Operation Pattern

The fourth operation pattern will be described mainly focusing on differences from the first to third operation patterns. The fourth operation pattern is an operation pattern in which the UE 100 receives, from the first cell, an RRC message (RRC Reconfiguration message) including information indicating a radio quality condition and instruction information in an intra gNB scenario.

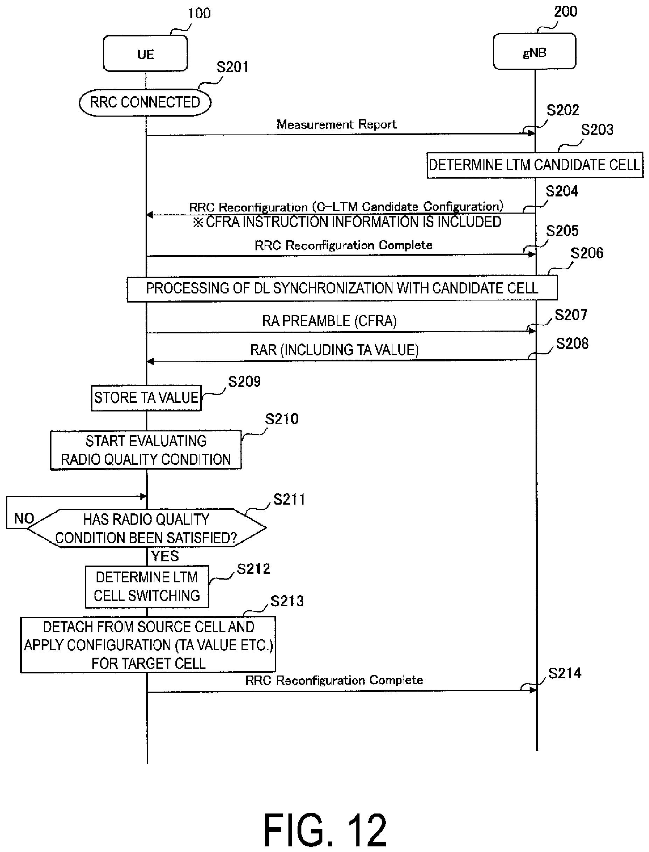

FIG. 12 is a diagram illustrating the fourth operation pattern of the mobile communication system 1 according to the present embodiment.

Operations of steps S201 to S203 are the same as those of the first operation pattern.

However, in step S204, the gNB 200 transmits, to the UE 100, an RRC Reconfiguration message including an LTM candidate cell configuration for C-LTM (C-LTM Candidate Configuration). The LTM candidate cell configuration for C-LTM may include a candidate cell configuration list, which is a list including configuration information (candidate cell configuration) of each of a plurality of second cells. A candidate cell configuration, which is each entry in the candidate cell configuration list, includes a cell ID of a corresponding second cell and information indicating a radio quality condition to be applied to the corresponding second cell. The candidate cell configuration may also include a RACH configuration (CFRA configuration) of the corresponding second cell. The candidate cell configuration may include a timer value for a timer that defines an upper limit of an RAR waiting period. In the fourth operation pattern, the candidate cell configuration may include instruction information indicating transmission of a preamble of CFRA to the corresponding second cell.

In step S205, the UE 100 stores the LTM candidate cell configuration received from the gNB 200 (first cell) and transmits an RRC Reconfiguration Complete message to the gNB 200 (first cell).

In step S206, the UE 100 performs downlink synchronization processing (DL synchronization processing) for the second cell.

In step S207, the UE 100 transmits an RA preamble of CFRA to the second cell designated by the RRC Reconfiguration message in step S204. Here, the UE 100 may transmit a preamble based on the CFRA configuration configured by the RRC Reconfiguration message. A gNB 200 (second cell) receives the RA preamble and derives a TA value based on the received RA preamble. When the UE 100 is instructed to transmit preambles to a plurality of second cells, it may transmit preambles to the second cells. In this case, the gNB 200 may derive a TA value for each second cell.

In step S208, a gNB 200 (first or second cell) transmits an RAR including the derived TA value to the UE 100. The UE 100 receives the RAR from the first or second cell. The RAR may include respective TA values of the plurality of second cells. For example, the RAR may include a plurality of sets each including a cell ID and a TA value of a second cell.

In step S209, the UE 100 stores the TA value acquired in step S208 without applying it. The UE 100 may store a TA value for each of the plurality of second cells.

In step S210, the UE 100 starts evaluating whether the radio quality condition configured in step S204 has been satisfied. For example, the UE 100 measures the radio quality of the first cell and/or the radio quality of the second cell and evaluates (determines) whether the measured value satisfies the configured radio quality condition. When a plurality of second cells are configured as candidate cells, the UE 100 starts evaluating each second cell.

In step S211, the UE 100 determines whether the radio quality condition has been satisfied for any of the second cells. When it is determined that the radio quality condition has been satisfied for any of the second cells (step S211: YES), in step S212, the UE 100 determines to perform LTM cell switching to the second cell for which the radio quality condition has been satisfied.

In step S213, the UE 100 detaches from the first cell, which is a source cell, and applies the configuration of the second cell, which is a target cell. Here, the UE 100 applies the TA value stored for the second cell, which is determined in step S212.

In step S214, the UE 100 applies the TA value to the second cell (target cell) determined in step S212 and transmits an RRC Reconfiguration Complete message. The gNB 200 receives the RRC Reconfiguration Complete message. The UE 100 may regard the execution of the LTM cell switching from the first cell to the second cell as having been successfully completed when it determines that the second cell has successfully received the first uplink data.

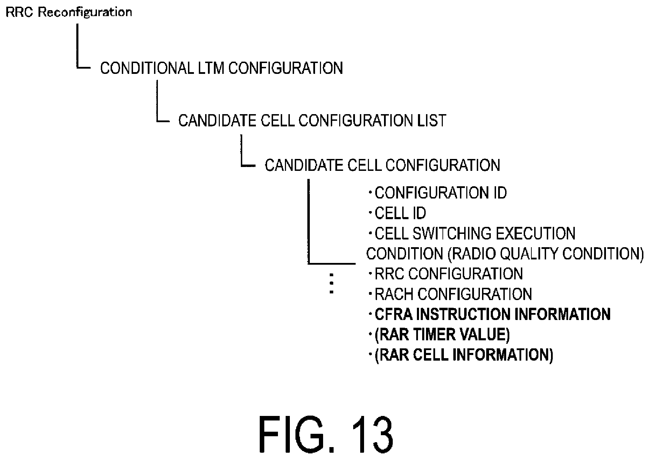

FIG. 13 is a diagram illustrating a configuration example of an RRC Reconfiguration message (RRC message in step S204) related to the fourth operation pattern of the present embodiment. Here, differences from the RRC Reconfiguration message according to the first operation pattern are described.

The candidate cell configuration list includes, as an entry, a candidate cell configuration which is a conditional LTM cell switching configuration for each candidate cell (second cell). The candidate cell configuration includes a configuration ID for identifying the configuration, a cell ID for identifying a corresponding candidate cell (second cell), information indicating an execution condition of cell switching (radio quality condition), an RRC configuration to be applied to communication with the corresponding candidate cell (second cell), a RACH configuration (CFRA configuration) to be applied to the corresponding candidate cell (second cell), and a CFRA instruction information for instructing preamble transmission of CFRA to the corresponding candidate cell (second cell). The candidate cell configuration may also include a timer value (RAR timer value) for a timer that defines an upper limit of a waiting period of an RAR for the corresponding candidate cell (second cell). The candidate cell configuration may also include information (RAR cell information) indicating whether the RAR may be received from a first cell or a second cell for the corresponding candidate cell (second cell).

In the illustrated example, a new conditional LTM configuration (C-LTM Config) is provided instead of the LTM Config which is an information element introduced in 3GPP Release 18. However, as another configuration example, 3GPP Release 18 may be reused, and each of a cell switching execution condition and a TA value may be added to each entry in the candidate cell configuration list (LTM Candidate To Add Mod List in 3GPP Release 18) within the LTM Config.

The fourth operation pattern can also be applied to the scenario of the inter-gNB 200 (see the second operation pattern and the third operation pattern), similarly to the first operation pattern.

### (5) Another Embodiment

The operation flows described above can be separately and independently implemented, and also be implemented in combination of two or more of the operation flows. For example, some steps of one operation flow may be added to another operation flow or some steps of one operation flow may be replaced with some steps of another operation flow. In each flow, all steps may not be necessarily performed, and only some of the steps may be performed. The order of the steps may be changed in each flow.

Although the example in which the base station is an NR base station (gNB) has been described in the embodiments and examples described above, the base station may be an LTE base station (eNB) or a 6G base station. The base station may be a relay node such as an Integrated Access and Backhaul (IAB) node. The base station may be a DU of the IAB node. The UE 100 may be a Mobile Termination (MT) of the IAB node. That is, the UE 100 may be a terminal function unit (a type of communication module) for a base station to control a repeater that performs signal relay. Such terminal function unit is referred to as an MT. Examples of the MT include, a Network Controlled Repeater (NCR)-MT, a Reconfigurable Intelligent Surface (RIS)-MT, in addition to the IAB-MT.

The term "network node" mainly means a base station, but may also mean a core network apparatus or a part (CU, DU, or RU) of the base station. The network node may include a combination of at least a part of the apparatus of the core network and at least a part of the base station.

A program causing a computer to execute each of the processing performed by the UE 100 or the gNB 200 may be provided. The program may be recorded in a computer-readable medium. Use of the computer-readable medium enables the program to be installed on a computer. Here, the computer-readable medium on which the program is recorded may be a non-transitory recording medium. The non-transitory recording medium is not particularly limited, and may be, for example, a recording medium such as a CD-ROM and/or a DVD-ROM. Circuits for executing processing performed by the UE 100 or the gNB 200 may be integrated, and at least a part of the UE 100 and the gNB 200 may be implemented as a semiconductor integrated circuit (chipset, System on a chip (SoC)).

The functions achieved by the UE 100 or the gNB 200 may be implemented in a circuitry or a processing circuitry programmed to achieve the described functions, including a general-purpose processor, a special-purpose processor, an integrated circuit, application specific integrated circuits (ASICs), a central processing unit (CPU), a conventional circuit, and/or combinations thereof. The processor may include transistors and/or other circuits and may be considered a circuitry or a processing circuitry. The processor may be a programmed processor that executes a program stored in the memory. As used herein, a circuitry, a unit, means are hardware programmed to achieve, or hardware performing, the described functions. The hardware may be any hardware disclosed herein or any hardware programmed to achieve or known to perform the described functions. When the hardware is a processor that is considered to be a type of circuitry, the circuitry, means, or a unit is a combination of hardware and software used to configure the hardware and/or the processor.

The phrases "based on" and "depending on/in response to" used in the present disclosure do not mean "based only on" and "only depending on/in response to" unless specifically stated otherwise. The phrase "based on" means both "based only on" and "based at least in part on". The phrase "depending on" means both "only depending on" and "at least partially depending on". The terms "include," "comprise" and variations thereof do not mean "include only items stated" but instead mean "may include only items stated" or "may include not only the items stated but also other items." The term "or" used in the present disclosure is not intended to be "exclusive or". Any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a", "an", and "the" are added in the present disclosure through translation, these articles include the plural unless clearly indicated otherwise in context.

The embodiments have been described above in detail with reference to the drawings, but specific configurations are not limited to those described above, and various design variation can be made without departing from the gist of the present disclosure.

The present application claims priority to Japanese Patent Application No. 2024-017581 (filed on February 8, 2024), the contents of which are incorporated herein by reference in their entirety.

### (6) Supplementary Notes

Features relating to the embodiments described above are described below as supplementary notes.

### Supplementary Note 1

A communication method used in a mobile communication system supporting L1/L2 Triggered Mobility (LTM), the communication method including the steps of:
receiving, at a user equipment from a first cell, information indicating a radio quality condition to be satisfied to perform LTM cell switching for switching a serving cell of the user equipment from the first cell to a second cell by using the LTM, and instruction information for instructing preamble transmission of contention-free random access (CFRA) to the second cell;
evaluating, at the user equipment, whether the radio quality condition has been satisfied for the second cell;
receiving, at the user equipment from the first cell or the second cell, a timing advance value derived based on the preamble transmission after performing the preamble transmission to the second cell in accordance with the instruction information;
storing, at the user equipment, the timing advance value until evaluating that the radio quality condition has been satisfied; and
applying, at the user equipment, the timing advance value to perform the LTM cell switching in response to evaluating that the radio quality condition has been satisfied.

### Supplementary Note 2

The communication method according to Supplementary Note 1, wherein the user equipment receives a random access response including the timing advance value from the first cell or the second cell.

### Supplementary Note 3

The communication method according to Supplementary Note 1 or 2, wherein the user equipment receives, from the first cell, a physical downlink control channel (PDCCH) command including the instruction information after starting the evaluation.

### Supplementary Note 4

The communication method according to Supplementary Note 1 or 2, wherein the user equipment receives, from the first cell, a radio resource control (RRC) message including the information indicating the radio quality condition and the instruction information.

### Supplementary Note 5

The communication method according to any one of Supplementary Notes 1 to 4, wherein a first network node managing the first cell:
receives CFRA information regarding a CFRA resource reserved for the second cell from a second network node managing the second cell; and
transmits a CFRA configuration based on the CFRA information from the first cell to the user equipment.

### Supplementary Note 6

The communication method according to Supplementary Note 5, wherein the user equipment receives the CFRA configuration from the first cell, and performs the preamble transmission to the second cell based on the CFRA configuration.

### Supplementary Note 7

The communication method according to any one of Supplementary Notes 1 to 6, wherein the user equipment receives the timing advance value from the first cell.

### Supplementary Note 8

The communication method according to Supplementary Note 7, wherein a first network node managing the first cell:
receives, from a second network node managing the second cell, the timing advance value derived by the second network node based on the preamble transmission; and
transmits the timing advance value from the first cell to the user equipment.

### Supplementary Note 9

The communication method according to any one of Supplementary Notes 1 to 6, wherein the user equipment receives the timing advance value from the second cell.

### Supplementary Note 10

The communication method according to Supplementary Note 9, wherein the user equipment transmits, to a network node, capability information indicating that the user equipment has a capability of receiving the timing advance value from the second cell.

### Supplementary Note 11

A user equipment used in a mobile communication system supporting L1/L2 Triggered Mobility (LTM), the user equipment including:
a receiver configured to receive, from a first cell, information indicating a radio quality condition to be satisfied to perform LTM cell switching for switching a serving cell of the user equipment from the first cell to a second cell by using the LTM, and instruction information for instructing preamble transmission of contention-free random access (CFRA) to the second cell;
a controller configured to evaluate whether the radio quality condition has been satisfied for the second cell; and
a transmitter configured to perform the preamble transmission to the second cell in accordance with the instruction information,
wherein the receiver receives a timing advance value derived based on the preamble transmission from the first cell or the second cell, and
the controller:
   stores the timing advance value until evaluating that the radio quality condition has been satisfied; and
   applies the timing advance value to perform the LTM cell switching in response to evaluating that the radio quality condition has been satisfied.

### Supplementary Note 12

A chipset including a circuit that executes the communication method according to Supplementary Note 1.

### Supplementary Note 13

A program causing a user equipment to execute the communication method according to Supplementary Note 1.

### Supplementary Note 14

A mobile communication system including the user equipment according to Supplementary Note 11 and a network node.

### REFERENCE SIGNS

1: Mobile communication system
5: Network
10: RAN
20: CN
100: UE
110: Receiver
120: Transmitter
130: Controller
140: Wireless communicator
200: gNB
210: Transmitter
220: Receiver
230: Controller
240: Network communicator
241: Transmitter
242: Receiver
250: Wireless communicator
300: AMF/UPF

## Claims

1. A communication method used in a mobile communication system supporting L1/L2 Triggered Mobility (LTM), the communication method comprising the steps of:
receiving, at a user equipment from a first cell, information indicating a radio quality condition to be satisfied to perform LTM cell switching for switching a serving cell of the user equipment from the first cell to a second cell by using the LTM, and instruction information for instructing preamble transmission of contention-free random access (CFRA) to the second cell;
evaluating, at the user equipment, whether the radio quality condition has been satisfied for the second cell;
receiving, at the user equipment from the first cell or the second cell, a timing advance value derived based on the preamble transmission after performing the preamble transmission to the second cell in accordance with the instruction information;
storing, at the user equipment, the timing advance value until evaluating that the radio quality condition has been satisfied; and
applying, at the user equipment, the timing advance value to perform the LTM cell switching in response to evaluating that the radio quality condition has been satisfied.

2. The communication method according to claim 1, wherein the user equipment receives a random access response including the timing advance value from the first cell or the second cell.

3. The communication method according to claim 1, wherein the user equipment receives, from the first cell, a physical downlink control channel (PDCCH) command including the instruction information after starting the evaluation.

4. The communication method according to claim 1, wherein the user equipment receives, from the first cell, a radio resource control (RRC) message including the information indicating the radio quality condition and the instruction information.

5. The communication method according to claim 1, wherein a first network node managing the first cell:
receives CFRA information regarding a CFRA resource reserved for the second cell from a second network node managing the second cell; and
transmits a CFRA configuration based on the CFRA information from the first cell to the user equipment.

6. The communication method according to claim 5, wherein the user equipment receives the CFRA configuration from the first cell, and performs the preamble transmission to the second cell based on the CFRA configuration.

7. The communication method according to claim 1, wherein the user equipment receives the timing advance value from the first cell.

8. The communication method according to claim 7, wherein a first network node managing the first cell:
receives, from a second network node managing the second cell, the timing advance value derived by the second network node based on the preamble transmission, and
transmits the timing advance value from the first cell to the user equipment.

9. The communication method according to claim 1, wherein the user equipment receives the timing advance value from the second cell.

10. The communication method according to claim 9, wherein the user equipment transmits, to a network node, capability information indicating that the user equipment has a capability of receiving the timing advance value from the second cell.

11. A user equipment used in a mobile communication system supporting L1/L2 Triggered Mobility (LTM), the user equipment comprising:
a receiver configured to receive, from a first cell, information indicating a radio quality condition to be satisfied to perform LTM cell switching for switching a serving cell of the user equipment from the first cell to a second cell by using the LTM, and instruction information for instructing preamble transmission of contention-free random access (CFRA) to the second cell;
a controller configured to evaluate whether the radio quality condition has been satisfied for the second cell; and
a transmitter configured to perform the preamble transmission to the second cell in accordance with the instruction information,
wherein the receiver receives a timing advance value derived based on the preamble transmission from the first cell or the second cell, and
the controller:
stores the timing advance value until evaluating that the radio quality condition has been satisfied; and
applies the timing advance value to perform the LTM cell switching in response to evaluating that the radio quality condition has been satisfied.

12. A chipset comprising a circuit that executes the communication method according to claim 1.

13. A program causing a user equipment to execute the communication method according to claim 1.

14. A mobile communication system comprising the user equipment according to claim 11 and a network node.
